(19) Europäisches Patentamt
European Patent Office
Office européen des brevets

(11) EP 0 695 314 B1

(12) EUROPEAN PATENT SPECIFICATION

(45) Date of publication and mention of the grant of the patent:
**01.07.1998 Bulletin 1998/27**

(21) Application number: **94916534.4**

(22) Date of filing: **15.04.1994**

(51) Int Cl.[6]: **C08F 10/00**, C08F 4/635

(86) International application number:
**PCT/US94/04164**

(87) International publication number:
**WO 94/24173 (27.10.1994 Gazette 1994/24)**

(54) **Process for the Preparation of a Supported Catalyst and its use in the Polymerisation or Copolymerisation of Ethylene**

Verfahren zur Herstellung von geträgertem Katalysator und seine Verwendung bei der Polymerisation oder Copolymerisation von Ethylen

Procédé pour la préparation d'un catalyseur supporté et son utilisation dans la polymérisation ou copolymérisation de l'éthylène

(84) Designated Contracting States:
**AT BE CH DE DK ES FR GB GR IE IT LI LU MC NL PT SE**

(30) Priority: **19.04.1993 RU 2003993**

(43) Date of publication of application:
**07.02.1996 Bulletin 1996/06**

(73) Proprietor: **UNIROYAL CHEMICAL COMPANY, Inc.**
**Middlebury Connecticut 06749 (US)**

(72) Inventors:
- **ZAKHAROV, V., A.**
  **Novosibirsk, 630090 (RU)**
- **MIKENAS, T., B.**
  **Novosibirsk, 630128 (RU)**
- **ECHEVSKAYA, L., G.**
  **Novosibirsk, 630117 (RU)**
- **MAKHTARULIN, S., I.**
  **Novosibirsk, 630117 (RU)**
- **McGEARY, Catherine, Ann**
  **Meriden, CT 06450 (US)**

(74) Representative: **Spott, Gottfried, Dr. et al**
**Patentanwälte**
**Spott, Weinmiller & Partner**
**Sendlinger-Tor-Platz 11**
**80336 München (DE)**

(56) References cited:
**EP-A- 0 272 132**
**EP-A- 0 351 266**
**DE-A- 2 440 593**

EP 0 695 314 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

## BACKGROUND OF THE INVENTION

1. Field of the Invention

The present invention relates to a method for polymerizing alpha-olefins, a high-activity catalyst for such a polymerization method, and a method for producing such a catalyst. In particular, the present invention relates to a catalyst, a method of precipitating said catalyst on a support, and the use of said supported catalyst for olefin polymerization. This supported catalyst is particularly suited for manufacturing noncrystalline homogeneous copolymers and terpolymers of ethylene with alpha-olefins.

2. Background Art

Highly efficient supported catalysts of the Ziegler-Natta type for the polymerization and copolymerization of olefins are well known. These catalysts are complexes formed by the interaction of alkyls of metals of groups I-III of the Periodic Table with halides and other derivatives of transition metals of groups IV-VIII. A typical coordination catalyst could be a complex between an aluminum alkyl and a titanium halide.

In US Patent 4,657,997 Best describes the use of a vanadium-containing catalyst component used to polymerize olefins to polyolefins having a high molecular weight and broad molecular weight distribution. This catalyst comprises a vanadium-containing catalyst component obtained via contacting an inert support material with a dihydrocarbyl magnesium compound, optionally an oxygen-containing compound, a vanadium compound, a Group III metal halide, and an aluminum alkyl cocatalyst. The catalysts of this invention are suited to producing polyethylene with a high molecular mass and a broad molecular weight distribution via suspension or gas phase methods. The products of the '997 patent are preferably high-strength film polymers, particularly LLDPE.

Another US patent, 4,849,389 to Nowlin et al, describes a catalyst composition for polymerizing alpha-olefin polymers of narrow molecular weight distribution. This patent is geared to the polymerization of alpha-olefins yielding products of relatively narrow molecular weight distribution which is primarily maintained by varying the amount of cocatalyst. The primary product of the polymerizations of this invention is linear low density polyethylene.

US patent 5,070,054 to Bailly et al presents a vanadium-based catalyst that contains at least one halogen and one alkoxy group, and a support containing $MgCl_2$ and an electron donor. The catalyst in this case has particles with a diameter greater than 10 micrometers and is used for the gas phase production of elastomeric copolymers of propylene. Copolymers obtained via this patent possess a broad molecular weight distribution.

The above patents do not suggest the use of supported vanadium catalysts for producing homogeneous, noncrystalline elastomeric copolymers of ethylene with alpha-olefins that possess a narrow molecular weight distribution. Furthermore, none of these patents disclose homogeneous noncrystalline elastomeric copolymers that are produced via a solution polymerization process with a high yield at temperatures exceeding 50°C.

It is, therefore, an object of the present invention to prepare a highly efficient supported vanadium catalyst designed for the polymerization of ethylene and alpha-olefins. It is a further object of this invention to catalyze the production of noncrystalline elastomeric copolymers of ethylene and alpha-olefins. It is a still further object of this invention to produce elastomeric terpolymers of ethylene, alpha-olefin, and nonconjugated diene with a high yield via solution polymerization at temperatures exceeding 50°C.

It will be seen from the examples contained herein that molecular weight and molecular weight distribution of polymer product may be controlled through variations in polymerization conditions, particularly temperature and added hydrogen. It will also be seen that the molecular weights of the polymers produced via the instant invention may be quite high, and may be produced in good yield. The noncrystalline polymer produced may have a narrow molecular weight distribution and may possess a high content of alpha-olefin.

## SUMMARY OF THE INVENTION

The present invention is concerned with the design of a highly efficient supported catalyst and a method for its preparation. These catalysts have been found to allow the production of noncrystalline elastomeric copolymers of ethylene with alpha-olefins. These elastomeric copolymers of ethylene contain an alpha-olefin content of greater than 20 mole percent.

This invention is directed to the preparation of a supported Ziegler-Natta type catalyst comprising a vanadium compounds, including chlorides and oxychlorides, precipitated on a magnesium halide support. The catalyst is prepared by the reaction of a vanadium compound with a magnesium halide support in the presence of a chlorinated hydrocarbon, $R^1Cl_n$ where n = 1 - 4, for example an alkylhalide.

Accordingly, the invention relates to a process for preparing a supported alpha-olefin copolymerization catalyst of a vanadium compound comprising the steps of:

a) preparing an activated magnesium-containing support by contacting magnesium chloride with an alcohol;
b) depositing said vanadium compound on said magnesium-containing support in the presence of an chlorinated hydrocarbon, $R^1Cl_n$ (wherein n = 1 - 4) to form a supported vanadium compound; and
c) combining said supported vanadium compound with an organoaluminum compound;

and
a process for the polymerization of ethylene and alpha-olefins having up to 20 carbon atoms or mixtures of ethylene, alphaolefins or diolefins which process comprises polymerizing one or more olefins in the presence of a catalyst system comprising (1) an organoaluminum cocatalyst and (2) a vanadium containing copolymerization catalyst obtained with the above process.

The magnesium halide was pretreated with an alcohol and activated with an organometallic compound. The resulting catalysts contain particles of less than 10 micrometers. These catalysts are particularly suitable for manufacturing noncrystalline homogeneous copolymers of ethylene and alpha olefins. These copolymers may contain more than 20 mole percent of alpha olefin and may be produced in higher than expected yields. Whenever the term "ethylene copolymer" is used herein, it includes ethylene with any other alpha-olefin as well as terpolymers of ethylene-propylene and other diene monomers and other copolymerizations of multiple monomers.

The polymerization may be performed at 40-150°C in a hydrocarbon solvent in the presence of an organometallic catalyst. These include certain organoaluminum compounds of the primary catalyst system including a wide variety of compounds or mixtures of compounds that might result from mixing together trialkylaluminum and aluminum trihalides in various ratios. Specific examples of such organoaluminum compounds are ethylaluminum sesquichloride, dimeric analogs of diisobutylaluminum chloride, ethylaluminum dibromide, tri-n-hexylaluminum, diethylaluminum iodide, tridecylaluminum sesquichloride, or methylaluminum sesquichloride.

Elastomeric terpolymers of ethylene, alpha-olefin, and nonconjugated diene with more than 50 kg of polymer per gram of vanadium may be produced in accordance with this invention. A solution polymerization process at polymerization temperatures exceeding 50°C is preferred. Temperatures of polymerization may range from 40 to 150°C.

The invention is directed to a method of producing elastomeric terpolymers in which a washing procedure usually necessary after preparation and activation of the catalyst support is not needed. Washing is not needed in any of the stages of catalyst preparation which is advantageous since washing of fine amorphous powders is a complicated and laborious procedure.

In further accordance with this invention, the particle size of the catalyst aescribed and used herein does not exceed 10 micrometers, which is advantageous for catalysts used in solution polymerization in that it provides a uniform distribution of catalyst particles in the reactor leading to more homogeneous composition of polymer products.

The highly efficient production method produces a purer polymer, requiring fewer purification procedures. The aforementioned polymer product of this invention has less residue from the catalyst which results in said increased purity.

In still further accordance with the present invention, the catalyst will allow the production of noncrystalline copolymers with a narrow molecular weight distribution ($M_w/M_n < 6$, as measured by GPC) to control molecular mass($M_w$) of polymer product from $10^4$ to $10^6$. The catalysts of the instant invention will allow the production of noncrystalline copolymers with a very high content of alpha-olefin. This content of alpha-olefin may range from 25 to 90 mole percent.

The process which uses the catalyst system described herein also has the advantage of easier feed and better handling of the solid catalyst. This improvement results in overall better process efficiency and cost savings in the polymer, copolymer, or terpolymer product.

## DETAILED DESCRIPTION OF THE INVENTION

Ziegler-Natta polymerization catalysts have been known since the 1950's and are used in polymerization and copolymerization reactions of industrial importance. Included amongst these reactions are copolymerizations of ethylene and propylene, and the terpolymerization of ethylene, propylene, and a diene monomer unit called a polyene. The diene unit is a monomer, such as dicyclopentadiene (DCPD), ethylidene norbornene (ENB), and 1,4-hexadiene, and is added to introduce unsaturation for curing purposes. The terpolymer described above may be cured, or vulcanized, by sulfur for which the unsaturation is required. The product, known as EPDM, is used in a wide variety of industrial end uses, including roofing membranes, automotive and industrial hoses, tire sidewalls and inner tubes, appliance parts, weatherstrip, mechanical goods, wire and cable, and many other uses. Important properties for EPDM to possess include excellent weather and ozone resistance, high temperature resistance, ease of processing, and flexibility.

Traditional Ziegler-Natta catalysts are complexes formed by the interaction of alkyls of metals of groups I-III of the

Periodic Table with halides and other derivatives of transition metals of groups IV-VIII. A typical coordination catalyst could be a complex between an aluminum alkyl and a titanium halide.

While such two-component catalyst systems are known to produce polymer, the amount of polymer produced per gram of vanadium in prior known systems has been relatively small. Moreover, a relatively substantial amount of vanadium residue was present in the polymer product, and consequently, removal of this residue was required to avoid polymer degradation. The present invention greatly increases the efficiency of the entire vanadium-based catalyst system, employing a catalyst, cocatalyst, and support. Both the catalyst species and the support are activated and the system is seen to increase polymerization yield and efficiency.

In order to increase catalyst efficiency and to reduce the amount of vanadium compound in the polymer product, it has become known to employ certain promoter (or activator) compounds in conjunction with the vanadium/organoaluminum catalyst composition. As will be detailed later, both the catalyst and the catalyst support are activated in this invention.

The supported catalyst described herein have been found to allow the production of non crystalline elastomeric copolymers of ethylene with alpha-olefins. These elastomeric copolymers of ethylene contain an alpha-olefin content of greater than 20 mole percent.

The catalyst systems described herein may be utilized in solution polymerization reactions, as are described by the Examples that follow. With slight modification, they may be utilized as well in gas phase polymerization processes.

This invention is directed to a supported Ziegler-Natta type catalyst comprising a vanadium chloride compound precipitated on a magnesium halide support. The catalyst is prepared by the reaction of a vanadium compound with a magnesium halide support in the presence of a chlorinated hydrocarbon, $R^1Cl_n$ where n = 1 - 4, such as an alkylhalide.

In a typical embodiment of this invention, highly dispersed magnesium chloride with surface area greater than 10 $m^2/g$ is prepared. The highly dispersed $MgCl_2$ may be prepared via dry milling of an anhydrous magnesium chloride in a ball mill for 5-20 hours. The particles possess a disordered crystalline structure with size of crystallites being less than 20 nm. There are a variety of known ways to prepare this magnesium halide. The preferred route involves:a specialized interaction of magnesium powder with an alkyl chloride in a hydrocarbon solvent. The reaction is shown below:

$$Mg + R^1Cl \longrightarrow [R^1MgCl] \xrightarrow{R1Cl} MgCl_2{\cdot}P$$

**(reaction 1)**

where $MgCl_2{\cdot}P$ is a polymer hydrocarbon.

The above reaction is performed with a molar ratio of $R^1Cl/Mg$ that is greater than or equal to 2.5 at 65-100°C in a hydrocarbon solvent. Preferred hydrocarbon solvents are saturated, straight chain alkanes which are liquid. Preferred amongst these solvents are n-hexane and n-heptane.

The $R^1Cl$ compound may be an alkyl halide of preferably up to 18 carbon atoms. A preferred alkyl halide for use in this invention is butyl chloride. The BuCl/Mg molar ratio ranges from 3-3.5. The intermediate product shown above, nonsolvated alkylmagnesium chloride [$R^1MgCl$], is produced in the first stage of hydrocarbon polymer synthesis. This intermediate is insoluble in aliphatic hydrocarbons. When the reaction above is performed with an excess amount of alkylchloride (molar ratio of $R^1Cl/Mg$ is greater than or equal to 2.5), this nonsolvated alkylmagnesium chloride transforms into the finely dispersed magnesium chloride with the desired surface area and particle size characteristics stated above.

The conversion to alkylmagnesium chloride into magnesium chloride is accompanied by the formation of polymer hydrocarbon P. This hydrocarbon has a $(CH_{2.3})_x$composition. In the magnesium chloride support ($MgCl_2{\cdot}P$), the polymer hydrocarbon ,P, is strongly bonded to $MgCl_2$ and may contain 5-15% of polymer P and from 85-95% $MgCl_2{\cdot}$. The hydrocarbon polymer does not contain Mg-C bonds. The product is washed several times with the hydrocarbon solvent species previously used and is utilized as a suspension therein. Microscopy indicates the product particle size to be from 1-100 micrometers.

After washing, the magnesium halide support is contacted with one or more electron donor substances containing labile hydrogen atoms. Compounds which may be employed for this use in accordance with the instant invention include alcohols and diols. Preferred alcohols have the structure $R^2$-OH, where $R^2$ may be alkyl, aryl, cycloalkyl, arylalkyl, alkadienyl, or alkenyl containing from 2 to 20 carbon atoms. More preferably, $R^2$ is an alkyl group with from 2 to 10 carbon atoms. Examples of the most preferred alcohols used for this purpose is 2-ethylhexanol and n-butanol.

The molar ratio of protic electron donor/mg may be in the range from 0.2 to 5.0. Molar ratio is the range 0.5 to 2.0 are more preferred.

The treatment of the magnesium chloride hydrocarbon polymer with alcohol proceeds according to the following

equation:

$$MgCl_2{\cdot}P + nR^2OH \rightarrow MgCl_2{\cdot}nR^2OH \qquad \text{(reaction 2)}$$

The alcohol is added to a magnesium chloride suspension in a hydrocarbon solvent, such as the ones mentioned, supra, at a temperature from 20 to 50°C with stirring. The molar ratio $R^2OH/Mg$ may range between 0.5 and 3.0. The range of 0.5 to 2.0 is more preferable. Interaction of the alcohol and the magnesium chloride compound serves to activate the magnesium chloride as a catalyst support with a formula $MgCl_2{\cdot}nR^2OH$. The crystalline structure of the magnesium chloride is completely disordered. The activated catalyst support becomes amorphous, and possibly gel-like if the alcohol/magnesium ratio exceeds two.

Following activation of the magnesium chloride support, a solution of vanadium compound in a chlorohydrocarbon solvent is added with stirring to the product of reaction 2 in hydrocarbon solvent. The vanadium compounds may be seiected from the group consisting of chlorides and oxychlorides of vanadium, such as $VCl_4$ or $VOCl_3$, in combination with the chlorocarbon solvent. The chlorocarbon solvent is of the formula $R^1Cl_n$here n may be an integer from 1 to 4 and $R^1$ is any conventionally available hydrocarbyl chain, preferably with 1 to 20 carbon atoms, more preferably 1 to 6. In a preferred embodiment, the vanadium compound is $VCl_4$ or $VOCl_3$ in solution with carbon tetrachloride. In such a preferred embodiment, the $CCl_4/V$ molar ratio may range from 10-60. In a yet more preferred embodiment, the vanadium compound is deposited under intensive stirring at 20-30°C and a V/Mg molar ratio from between 0.02 to 0.25. A more preferred molar ratio is from 0.04 to 0.15. After addition of the vanadium compound to the catalyst support, the catalyst is treated with an organometallic compound of a Group IA, IIA, OR IIIA metal. Certain of these treatment compounds also are known as cocatalysts when used in ethylene polymerization processes, but they are generally believed, without being held to the accuracy of this belief, to be acting as reduction agents for the Vanadium compounds. These compounds include aluminum alkyls, aluminum alkyl hydrides, lithium aluminum alkyls, zinc alkyls and magnesium alkyls. Preferred organometallic compounds in this category are aluminum organic compounds and more preferred compounds may be represented by the formula $AlR"_nX_{3-n}$ wherein R" is hydrogen, hydrocarbyl, or a substituted hydrocarbyl and n is 1, 2 or 3.

More preferably, R" is an alkyl group having from 2 to 10 carbon atoms, and X is a halogen. Still more preferably, R" is an alkyl group having from 2 to 10 carbon atoms, and X is chlorine. Illustrative examples of these compounds include but are not limited to aluminum triethyl or aluminum tributyl. Compounds like diisobutyl aluminum hydride and diethyl aluminum ethoxide are also preferred. The most preferred compounds include ethyl aluminum dichloride, ethyl aluminum sesquichloride, and diethyl aluminum chloride.

A solution of the preferred aluminum organic compound (hereinafter Al-R") in a hydrocarbon solvent is then introduced into the vanadium and magnesium-containing suspension. A preferred $Al\text{-}R"/R^2OH$ ratio is 0.8-1.5.

The reaction mixture is then stirred at a temperature ranging from 40-80°C from one to two hours. The reaction that takes place at this stage is thought to be

$$MgCl_2{\cdot}nR^2OH + 0.5nAlEt_2Cl \rightarrow MgCl_2{\cdot}0.5n(R^2O)_2AlCl \qquad \text{(Reaction 3)}$$

After this reaction takes place, the amorphous magnesium-containing product is transformed into a highly dispersed catalyst powder with particle size less than 10 micrometers and surface area exceeding 30 square meters. This powder material remains suspended in a hydrocarbon solvent and may be used in this state without washing or separation of the solid catalyst.

After drying under vacuum, the catalyst was found to have the following weight percent composition:

| | |
|---|---|
| Mg | 3-12 |
| Al | 4-10 |
| V | 0.5-2 |
| Cl | 20-40 |
| OR | 35-65 |

It is noted that only a part of the aluminum compounds produced upon the catalyst formation via reaction 3 is bonded to the solid catalyst, and another part remains in the hydrocarbon solvent. The amount of aluminum bonded to the catalyst can be determined after decantation and washing of the catalyst in hydrocarbon solvent. In this case, the amount of aluminum in the catalyst reaches 0.5 to 2 weight percent. The total amount of vanadium and aluminum remains in the solid catalyst.

One of the advantages of the catalyst system and polymerization procedures is to eliminate the need for washing the activated $MgCl_2$ produced by reaction 2 as well as the products of the subsequent stages. This is an important advantage since washing of fine amorphous powders is a complicated and laborious procedure.

Another advantage of the invention is the small particle size of the catalyst particles (less than 10 micrometers), especially advantageous in solution polymerizations. Application of such highly dispersed catalyst particles facilitates their dosing, provides a uniform distribution of catalyst in the reactor, and leads to products of a more heterogeneous composition.

Catalysts obtained as disclosed herein may be used for olefin polymerization, copolymerization of olefin with alpha-olefins containing from 3 to 12 carbon atoms, or terpolymerization of an olefin with several alpha-olefins. An example of the latter would be the terpolymerization of propylene with 1-octene. Terpolymerization of ethylene with propylene and nonconjugated diene is also suitable for practice of this invention.

The catalyst used in polymerizations such as these are usually assisted by cocatalysts. Preferred cocatalysts include compounds of the formula $AlR''_3$ and may be aluminum trialkyls, $R_3$ may be a $C_2$ to $C_{18}$ alkyl. Such compounds used as cocatalysts include aluminum triisobutyrate [Al(i-butyl)$_3$] or triethylaluminum. The amount of cocatalyst used corresponds to an Al/V molar ratio ranging from 50 to 500. The polymerization may be performed at 40-150°C in a hydrocarbon solvent in the presence of the $AlR''_3$ cocatalyst Preferably, the polymerization temperature will range from 50 to 90°C. Even more preferably, the polymerization reaction temperature will range from 60 to 85°C. The reaction will proceed under pressure from 1-40 atmospheres (101 - 4053 kPa) in a non-polar hydrocarbon solvent such as n-hexane or n-heptane.

Polyethylene and copolymers with high molecular weights are produced by the teachings of this invention. The molecular weights of polymer products depend on the polymerization temperature, content and nature of the alpha-olefin used in copolymerization.

Hydrogen is used as an efficient chain transfer agent over the preferred catalyst and may be used for reducing the molecular weight of the polymer products and controlling the molecular weight distribution of products. Varying the conditions of polymerization, such as temperature, amount of added hydrogen, and alpha-olefin content, allows the production of polymers with a wide range of molecular weight The molecular weights of the products may range from $10^6$ to $10^4$. Molecular weights of the polymer products of this invention were determined by gel permeation chromatography (GPC) using polystyrene equivalents. GPC is used both analytically and in polymerization with a wide variety of systems encompassing both low and high molecular weights.

The catalyst demonstrates good sensitivity to molecular weight control agents at high activity rates, thus allowing production of polymers with a broad spectrum of molecular weights

Polymer products with molecular weights as low as 80,000 have been prepared and polymer products with molecular weights as low as 20,000 are accessible using the methods of this invention. Very high molecular weight polymers can also be prepared under appropriate conditions. Polymers with molecular weights as high as 1,100,000 have been obtained and the obtainable molecular weights may be as high as 1.5 million.

Molecular weight of polymers, expressed as Mw/Mn, may be controlled using molecular weight regulators. Products in the range Mw/Mn from 2.0 to 8.0 are possible using the methods of this invention. More commonly used Mw/Mn ratios range from 2.5 to 6.1. A more preferred Mw/Mn ratio is from 2.5 to 4.5.

In the instant invention, the catalyst system used allows high yield of ethylene/propylene catalyst per gram of vanadium used. Yields as high as 50-225 kg of ethylene/propylene copolymer per gram of vanadium per hour were observed. In the case of EPDM, yields as high as 20-50 kg of EPDM per gram of vanadium per hour were observed.

In addition, following the teachings of the instant invention completely soluble, non-crystalline elastomeric polymers of EPDM have been prepared spanning the composition range of from 26 to 86 mole percent propylene. Polymer products with higher and lower levels of propylene have been obtained using the catalysts of the instant invention. Polymers with as low as 14 mole percent propylene have been prepared; however, at such low propylene levels some crystallinity and insolubility in process solvent may be observed.

Also observed in the instant invention are polymers containing greater than 40% propylene as totally homogeneous cements. These cements contained no crystallinity and were high melting (melting over 70°C). Products containing up to 70% propylene, with no polypropylene crystallinity, were also observed. In the practice of this invention, EPDM containing from 2 to 10 percent termonomer may be produced.

This is a significant improvement over the state of the art, in which heterogeneous catalysts do not easily incorporate relatively high levels of a termonomer into the copolymer system. Easy incorporation of the termonomer enhances the desirable cure and physical properties in the terpolymer product. Using the catalyst system and procedures of this invention, molecular weights and molecular weight distribution of products may be controlled through varying polymerization conditions, particularly temperature and added hydrogen. Very high molecular weight products were observed. The catalyst systems of the present invention also allows higher molecular weight products than have heretofore been possible. High molecular weight is desirable in end use applications that require good tensile strength, good green strength, and require high loadings of filler compounds. It also allows potential expansion of differentiated

products with higher percentages of polypropylene that have been possible and practicable.

Measured by GPC as the ratio of Mw and Mn, it is known that broad molecular weight distribution (MWD) polymers have variable composition; i.e., higher ethylene content in the high molecular weight tail, provide excellent mill processing and calendering, possess good green strength, have slower cure rates, have a lesser state of cure, and cannot be heavily filled.

Narrow MWD polymers have faster cure rates, have a better state of cure, are more resistant to shear breakdown, give smoother extrusion, are more soluble in hydrocarbon solvents, and possess excellent mixing properties. In an aspect of this invention, the catalyst system and process for its use yields a narrow molecular weight distribution of products, as measured by GPC. Use of the catalyst systems of the present invention results in low metal residues in the polymer product, thus eliminating the usually necessary washing steps. This elimination represents a savings in both cost and time and is an advantage in terms of efficiency and cost effective industrial polymer production.

The present invention also relates to a method of polymerizing alpha-olefins using the catalyst described herein and to polymers prepared by said method of polymerizing alpha-olefins. The alpha olefins that are polymerized may be the same or may be different. Illustrative examples include the polymerization of ethylene to yield polyethylene or copolymerization of ethylene and propylene. A preferred method of polymerization is the use of ethylene, propylene, and a polyene to prepare a sulfur vulcanizable terpolymer. In this invention, the term polyene is used to describe an ethylenic type compound, or an unsaturated polymer containing a plurality of carbon-carbon double bonds.

Illustrative examples of vanadium compounds that may be used in the catalyst compositions of the present invention are vanadium halides, oxyhalides, alkoxides, and acetylacetonates. Illustrative examples of vanadium halides include vanadium fluorides, chlorides, bromides, and iodides. Preferred vanadium compounds used in the catalyst composition of the present invention include vanadium trichloride, vanadium tetrachloride, vanadium tetrabromide, vanadium oxytrichloride, and alkyl vanadates including vanadyl acetylacetonates, vanadium acetylacetonates, and vanadium halovanadates. Among the most preferred vanadium compounds are vanadium halides and vanadium oxyhalides.

Examples of alpha-olefins that may be polymerized with the catalysts system of the present invention include ethylene, propylene, butene and the like, including mixtures thereof. In order to introduce unsaturation for vulcanization of the polymer, small amounts of a polyene may be employed. The polyene may be selected from those known in the art and commonly used for the preparation of ethylene-propylene-polyene terpolymers including open chain polyunsaturated hydrocarbons containing from 4 to 20 carbon atoms. Included in this group are such compounds as 1,4-hexadiene, 1-ethyl-1,1,1-tridecadiene, 1,9 octadecyldiene, monocyclic polyenes and polycyclic polyenes. The polyunsaturated bridged-ring hydrocarbons that may be used include polyunsaturated derivatives of bicyclo(2,2,1)heptane wherein at least one double bond is present in one of the bridged rings, such as dicyclopentadiene, bicyclo(2,2,1) heptane wherein at least one double bond is present in one of the bridged rings. Included in this group of compounds are dicyclopentadiene, bicyclo(2,2,1)hepta-2,5-diene, the alkylidene norbornenes, and especially the 5-alkylidene-2-norbornenes. A preferred 5-alkylidene-2-norbornene would be one wherein the alkylidene group contains from 1 to 20 carbon atoms and the alkenyl group contains from 3 to 20 carbon atoms. A more preferred 5-alkylidene-2-norbornene would contain an alkylidene group with from 1 to 8 carbon atoms and an alkenyl group contains from 3 to 10 carbon atoms. A particularly preferred 5-alkylidene-2-norbornene is 5-ethylidene-2-norbornene.

Other bridged-ring hydrocarbons include polyunsaturated derivatives of bicyclo(2,2,2)octane such as bicyclo (2,2,2) octa-2,5-diene, polyunsaturated derivatives of bicyclo(3,2,1)octane, polyunsaturated derivatives of bicyclo (3,2,1)nonane, and polyunsaturated derivatives of bicyclo(3,2,2)nonane. At least one double bond is present in a bridged ring of one of the above compounds, and at least one other double bond in a bridged ring or a side chain.

The polymerization process that is in accordance with this invention may be carried out in either gas phase or liquid phase. If the polymerization is carried out in the liquid phase, the process is carried out in an inert solvent. An added solvent is generally not essential, as excess monomer or monomers being polymerized may serve as the solvent. Generally, the usual solvents used in ionic coordination type of polymerization may be used. Included amongst these are aromatic hydrocarbon solvents, aliphatic hydrocarbon solvents, and chlorinated aromatic or aliphatic solvents such as chlorobenzene or tetrachloroethylene. Any solvent may be employed that does not destroy the catalyst.

The following examples are meant to illustrate the practice of this invention in more detail and not limit in any manner whatsoever the scope of this invention. The efficiency of the catalyst is calculated in all examples as grams of polymer per gram of vanadium compound per hour of polymerization time.

## EXAMPLES

The following Examples are concerned with both preparation of the catalyst (Examples 1-6) and polymerization (Examples 7-18).

Comparative Examples (A-C; A1-C1) are also included.

**Preparation of Catalysts**

Example 1

a) Preparation of $MgCl_2$ Catalyst Support

4.8 g of magnesium powder, 50 ml of hexane, and 0.2 g of iodine were placed into a 0.4 liter glass reactor equipped with a stirring system and a means for introducing argon gas. The reactor was heated to 68°C and 15 ml of butyl chloride was added, accompanied by stirring for 30 minutes.

One hundred ml of hexane were then introduced to the reactor, followed by 60 ml of butyl chloride added over a one hour time period, such that the BuCl/Mg molar ratio was 3/1. The mixture was stirred for 4 hours at 68°C. The resulting product was a powder suspended in n-hexane.

The supernatant liquid phase was decanted and the solid product was washed three times with 100 ml portions of n-hexane. The solid product was 20 g comprised of 18.2 g of $MgCl_2$ and 1.8 g of the polymer hydrocarbon $(CH_{2.3})_x$. The particle size of the products was found to range from 3-50 micrometers, when analyzed by microscopy. The surface area of the product was analyzed as 72 square meters/gram.

b) Preparation of Activated Catalyst Support

The 20 g of $MgCl_2$ catalyst support obtained in the previous stage were suspended in 90 ml of n-hexane and introduced into the same 0.4 liter glass reactor. The solution of 24 ml of 2-ethylhexanol in 26 ml of hexane (molar ratio of alcohol to magnesium $R^2$-OH/Mg = 0.7) is added dropwise into the reactor at 25°C. The mixture was stirred for 40 minutes at 40°C. An amorphous product with the composition $MgCl_2$ 0.7 $R^2OH$ is obtained at this stage, representing the activated $MgCl_2$.

c) Preparation of Catalyst Product

To the amorphous product $MgCl_2$ of part (b) was added 25 ml of a solution of vanadium tetrachloride in carbon tetrachloride (C.08 g of $VCl_4$ per ml of solution; molar ratio $CCl_4/VCl_4$ = 30) dropwise [molar ratio V/Mg = 0.07]. Following this addition, 53 ml of a solution of diethylaluminum chloride in n-hexane (1.7 mmol of $AlEt_2Cl$ per ml, molar ratio $AlEt_2Cl/R^2OH$ = 0.6) was added continuously into the reactor over 30 minutes. The mixture was stirred for an hour at 60°C, after which time the catalyst was formed as fine particles suspended in n-hexane. The product was analyzed by microscopy and found to possess a particle size ranging from 1-10 micrometers, with a surface area of 42 square meters per gram. The composition of the product was found to be: Weight Percent: 9.5% of Mg, 5.0% of Al, 1.5% of V, 38.2% of Cl and 40.5% of $OR^2$-.

For use in polymerizations, Examples 7-18, the catalyst is used directly as a slurry without additional washing.

**Example 2:** Preparation of Catalyst with 2-Ethyl-Hexanol Activated Support

Following a procedure essentially identical to that described in Example 1, the following alterations were made in the procedure detailed above: 10 g of $MgCl_2$ support suspended in 80 ml of n-hexane were used for activating the support (part b). A solution of 32.6 ml of 2-ethylhexanol is 46.4 ml of n-hexane was added to the suspension of $MgCl_2$ support (molar ratio $R^2OH$/Mg = 2). Eight ml of vanadiumoxytrichloride solution in $CCl_4$, with a concentration of 0.071 g $VOCl_3$ per ml, molar ratio V/Mg = 0.08, were added to the suspension of activated $MgCl_2$. 63 ml of diethylaluminum chloride solution in n-hexane (concentration 1.7 mmol of $AlEt_2Cl$ per ml, molar ratio $AlEt_2Cl/R^2OH$ = 0.5) are used for subsequent treatment of the catalyst.

The catalyst obtained from this procedure was found to have the following composition: Weight Percent: 3.7% of Mg, 8.1 % of Al, 0.62% of V, 22.8% of Cl and 62.1% of $OR^2$-.

**Example 3:** Preparation of Catalyst with Vanadium Tetrachloride/$CCl_4$ Activated Support

Following a procedure essentially identical to that described in Example 2, the following alterations were made in the procedure detailed above: 4.6 ml of vanadium tetrachloride solution in $CCl_4$, with a concentration of 0.24 g $VCl_4$ per ml, molar ratio V/Mg =0,13, were added into the suspension of activated $MgCl_2$ support (molar ratio V/Mg =0.13). The catalyst obtained from this procedure was found to have the following composition: Weight Percent: 3.8% Mg, 7.9% Al, 1.1% V, 24.1% Cl and 61.2% $OR^2$-.

**Example 4:** Preparation of Catalyst with n-Hexane Activated Support

Following a procedure essentially identical to that described in Example 2, the following alterations were made in the procedure detailed above: 19 ml of n-butanol dissolved in 81 ml of n-hexane were used for the preparation of the activated $MgCl_2$ support (molar ratio n-butanol/magnesium = 2). 9 ml of vanadium tetrachloride solution in $CCl_4$ (concentration of $VCl_4$ per ml 0.08 g) were added to the suspension of $MgCl_2$ support (molar ratio V/Mg =0.11)

The catalyst obtained from this procedure was found to have the following composition: Weight Percent: 6.1% Mg, 8.5% Al, 0.9% V, 31.0% Cl and 47.0% $OR^2$.

**Example 5:** Preparation of Catalyst with Vanadium Tetrachloride/$CCl_3$ Activated Support

Following a procedure essentially identical to that described in Example 1, the only alteration was that trichloromethane was used as the halocarbon instead of $CCl_4$ for preparing the vanadium tetrachloride solution for the activated $MgCl_2$ support (molar ratio $CCl_3/VCl_4$ = 30).

The catalyst obtained from this procedure was found to have the following composition: 9.6% Mg, 5.1% Al, 1.4% V, 38.8% Cl and 40.3% $OR^2$.

**Example 6:** Preparation of Catalyst with Aluminum Diethyl Chloride Activated Support

Following a procedure essentially identical to that described in Example 2, the following alterations were made in the procedure detailed above: 24 ml of $VOCl_3$ solution in $CCl_4$ ($VOCl_3$/MG = 0.24) were used for catalyst preparation. 25 ml of $AlEt_2Cl$ solution ($AlEt_2Cl/R^2OH$ =0.2) were used for catalyst treatment.

The catalyst obtained from this procedure was found to have the following composition: 5.6% Mg, 3.7% Al, 1.8% V, 24.7% Cl and 60.5% $OR^2$.

**POLYMERIZATION EXAMPLES**

**Example 7:** Polymerization of Ethylene

Two-hundred and fifty ml of n-hexane and 1.5 millimoles of triisobutyl aluminum in 6 ml of n-hexane were introduced into a 0.7 liter steel reactor equipped with a stirring system and thermostatic jacket. The reactor was heated to 80°C and ethylene and hydrogen were fed into it with stirring. (Partial pressures were 7 atm (709 kPa) and 0.5 atm (51 kPa), respectively.) One ml of the suspension containing 0.01 g of the catalyst product obtained in Example 1 in n-hexane was then introduced.

The polymerization was performed at 80°C during 1 hour under the constant ethylene pressure of 7 atm(709 kPa). Forty three g of polyethylene powder suspended in n-hexane were obtained with the following reaction data: Yield: 43 g of polyethylene powder suspended in n-hexane.
Activity: 41 kg per g V per hour at 7.0 atmospheres (709 kPa) of ethylene. Polymer yield: 287 kg/g V

Melt Index (5 kg, 190°C) of polyethylene: 0.15g/10 min.

**CO-POLYMERIZATIONS AND TER-POLYMERIZATIONS**

**EXAMPLE 8:** Copolymerization of Ethylene with Propylene

Four hundred ml of n-hexane and 1.5 millimoles of triisobutyl aluminum in 6 ml of n-hexane were introduced into a 0.7 liter steel reactor equipped with a stirring system and thermoset jacket. The reactor was heated to 70°C. Ethylene and propylene were fed into it with stirring. Pressure of the monomers was 2.6 atm (263 kPa) with propylene concentration of 45 mole percent in the gas phase of the reactor. One ml of the suspension containing 0.0072 g of the catalyst product obtained in Example 1 in n-hexane was then introduced into the reactor.

The copolymerization was performed at 70°C during 1 hour under the constant monomer pressure. The mixture of monomers containing 35 mol% of propylene was constantly fed into the reactor to provide the permanent monomer pressure and molar ratio during the copolymerization. 20.4 g of the copolymer dissolved in n-hexane were obtained as well as the following reaction data:

Yield: 192 kg of copolymer per gram of vanadium

Propylene content in copolymer obtained was 34 mole percent; or 42 wt. percent.

Molecular mass of the obtained copolymer, as seen from GPC data was $6.2 \times 10^5$.

Polydispersity: Mw/Mn = 3.9

**EXAMPLE 9:** Copolymerization of Ethylene with Propylene

The copolymerization of ethylene and propylene was performed in an essentially identical manner to that of Example 8, except that the catalysts used were that of Example 2. The quantity of the catalyst used was 0.018 g. Eleven g of the copolymer were obtained; copolymer yield was 96 kg per gram of vanadium. The propylene content in the copolymer was 36 mole percent, or 46 wt. percent.

The product copolymer was fractionized by successive treatment of the copolymer product with boiling ether and boiling n-hexane. Each of these fractions contained 37.5 and 34.5 mole percent of propylene, respectively. The content of propylene in insoluble residue was 37 mole percent.

**EXAMPLE 10:** Copolymerization of Ethylene with Propylene

The copolymerization of ethylene and propylene was performed in an essentially identical manner to that of Example 8, except that the catalysts used were that of Example 3. The quantity of the catalyst used was 0.016 g. Twenty g of the copolymer were obtained; copolymer yield was 111 kg per gram of vanadium. The propylene content in the copolymer was 36 mole percent, or 45 wt. percent.

**EXAMPLE 11:** Copolymerization of Ethylene with Propylene

The copolymerization of ethylene and propylene was performed in an essentially identical manner to that of Example 8, except that the catalysts used was that of Example 4. The quantity of the catalyst used was 0.018 g. 14.7 g of the copolymer were obtained; copolymer yield was 91 kg per gram of vanadium. The propylene content in the copolymer was 35.5 mole percent, or 44.5 wt. percent.

**Example 12:** Copolymerization of Ethylene with Propylene

The copolymerization of ethylene and propylene was performed in an essentially identical manner to that of Example 8, except that the catalysts used were that of Example 5. The quantity of the catalyst used was 0.018 g. 19.8 g of the copolymer was obtained; copolymer yield was 128 kg per gram of vanadium. The propylene content in the copolymer was 34.2 mole percent, or 40.3 wt. percent.

**EXAMPLE 13:** Copolymerization of Ethylene with Propylene

The copolymerization of ethylene and propylene was performed in an essentially identical manner to that of Example 8, except that the catalysts used were that of Example 6. The quantity of the catalyst used was 0.018 g. 17.8 g of the copolymer was obtained; copolymer yield was 82 kg per gram of vanadium. The propylene content in the copolymer was 33.8 mole percent, or 40.1 wt. percent.

**Example 14:** Copolymerization of Ethylene with Propylene

The copolymerization of ethylene and propylene was performed in an essentially identical manner to that of Example 8, except that the propylene and ethylene were fed into the reactor prior to polymerization. The total monomer pressure was 3.6 atm (365 kPa), with the propylene concentration in the gas phase 82 mole percent. 0.0152 gram of the catalyst of Example 1 was used.

The mixture of monomers, containing 70 mole percent of propylene was fed into the reactor during copolymerization. Twenty-five g of the copolymer were obtained; copolymer yield was 110 kg per gram of vanadium. The propylene content in the copolymer was 62 mole percent, or 88 wt. percent. According to GPC data, the molecular mass of the copolymer, Mw, was $5.8 \times 10^5$, and the polydispersity Mw/Mn =3.8

**EXAMPLE 15:** Terpolymerization of Ethylene, Propylene, and Octene-1

The terpolymerization of ethylene, propylene, and octene-1 was performed in a similar manner to that of Example 8 with the catalyst of Example 1. In this Example, propylene and ethylene were fed into the reactor before polymerization; the total pressure of monomers was 3.6 atm(365 kPa).Propylene concentration in the gas phase was 40 mole percent.

Forty ml of octene-1 were introduced into the reactor, followed by 0.0182 g of the catalyst of Example 1. The mixture of gaseous monomers containing 30 mole percent of propylene was fed continuously into the reactor during polymerization. 16.8 g of the polymer were obtained; a yield of 69.4 kg per gram of vanadium. The polymer product

was found to contain 29 mole percent of propylene and 11 mole percent of octene-1.

**EXAMPLE 16:** Copolymerization of Ethylene with Propylene

The copolymerization of ethylene and propylene was performed in an essentially identical manner to that of Example 8, except that the content of the propylene in the reactor gas phase before polymerization was 40 mole percent and the total monomer pressure was 3.0 atm (304 kPa), with the propylene concentration in the gas mixture during copolymerization was 30 mole percent. The reaction was performed at 60°C, 0.0152 gram of the catalyst of Example 1 was used.

22.3 g of the copolymer were obtained; copolymer yield was 209 kg per gram of vanadium. The propylene content in the copolymer was 29 mole percent, or 35.5 wt. percent. According to GPC data, the molecular mass of the copolymer, Mw, was 9.1 x $10^5$, and the polydispersity Mw/Mn = 2.5

**EXAMPLE 17:** Copolymerization of Ethylene with Propylene in the Presence of Hydrogen

The copolymerization of ethylene and propylene was performed in an essentially identical manner to that of Example 8, except that hydrogen, of partial pressure 0.4 atm (41 kPa), was fed into the reactor before polymerization. The total pressure during polymerization was 3.4 atm (345 kPa). 0.01 g of the catalyst of Example 1 was used.

18.8 g of the copolymer were obtained; copolymer yield was 125 kg per gram of vanadium. The propylene content in the copolymer was 35.8 mole percent, or 44.5 wt. percent. According to GPC data, the molecular mass of the copolymer, Mw, was 2.4 x $10^5$, and the polydispersity Mw/Mn = 2.7

**EXAMPLE 18:** Terpolymerization of Ethylene, Propylene, and 5-ethylidene-2-norbornene (ENB)

The terpolymerization of ethylene, propylene, and 5-ethylidene-2-norbornene (END) was performed in a similar manner to that of Example 8 with the catalyst of Example 1. In this Example, 3 ml of ENB were introduced into the reactor before polymerization. 19 g of the polymer were obtained; a yield of 69 kg per gram of vanadium. The polymer product was found to contain 30 mole percent of propylene and 3.0 mole percent of ENB.

**COMPARATIVE EXAMPLES**

**COMPARATIVE EXAMPLE A:** PREPARATION OF $MgCL_2$ SUPPORTED VANADIUM CATALYST [WITHOUT SUPPORT ACTIVATION, ORGANOALUMINUM TREATMENT OR CHLOROHYDROCARBON PRECIPITATION MEDIA]

2.7 g of $MgCl_2$ support (without alcohol activation) prepared as in Example 1 was suspended in 30 ml of n-hexane in a 0.2 liter glass reactor. Six ml of vanadiumoxytrichloride solution in n-hexane, containing 0.44 g of $VOCl_3$ were added to the suspension of $MgCl_2$ support at ambient temperature. The mixture was stirred for 30 minutes. The supernatant liquid phase was then decanted and the solid catalyst was washed three times with 50 ml of n-hexane. The catalyst product obtained contained 1.4 wt. percent of vanadium and 22.1 wt. percent of magnesium.

**COMPARATIVE EXAMPLE A1**: PREPARATION OF ETHYLENE/PROPYLENE COPOLYMER USING CATALYST OF COMPARATIVE EXAMPLE A

In essentially the same manner as described in Example 8, 0.035 gram of the catalyst prepared above was used for the copolymerization of ethylene and propylene. 13.5 g of the copolymer were obtained. The polymer yield was 28 kg per gram of vanadium. Propylene content in the copolymer was 33.5 mole percent, or 40 wt. percent.

**COMPARATIVE EXAMPLE B:** PREPARATION OF $MgCL_2$ SUPPORTED VANADIUM CATALYST [WITH DIETHYLALUMINUMCHLORIDE TREATMENT BUT WITHOUT SUPPORT ACTIVATION OR CHLOROHYDROCARBON MEDIA FOR VANADIUM DEPOSITION]

4.2 g of $MgCl_2$ support prepared as in Example 1 were suspended in 50 ml of n-hexane in a 0.2 liter glass reactor. 1.6 ml of vanadiumoxytrichloride solution in n-hexane, containing 1 mmol of $AlEt_2Cl$ per ml were added to the suspension of $MgCl_2$ support at ambient temperature and stirred for an hour at 60°C. Four ml of $VOCl_3$ solution in n-hexane (containing 0.28 g $VOCl_3$) solution in n-hexane were added at ambient temperature to the suspension of $MgCl_2$ support treated with $AlEt_2Cl$ (molar ratio $VOCl_3/AlEt_2Cl$ = 1). The mixture was stirred for one hour at 40°C. The catalyst product obtained contained 1.8 wt. percent of vanadium, 0.85 wt. percent of aluminum, and 20.5 wt. percent of magnesium.

**COMPARATIVE EXAMPLE B1**: PREPARATION OF ETHYLENE/PROPYLENE COPOLYMER USING CATALYST OF COMPARATIVE EXAMPLE B

In essentially the same manner as described in Example 8, 0.035 gram of the catalyst prepared above was used for the copolymerization of ethylene and propylene. 15.8 g of the copolymer were obtained. The polymer yield was 25 kg per gram of vanadium. Propylene content in the copolymer was 34.2 mole percent, or 40.9 wt. percent.

**COMPARATIVE EXAMPLE C:** PREPARATION OF Mg $CL_2$ SUPPORTED VANADIUM CATALYST [WITHOUT SUPPORT ACTIVATION OR ORGANOALUMINUM TREATMENT BUT WITH CHLOROHYDROCARBON VANADIUM PRECIPITATION MEDIA]

4.3 g of $MgCl_2$ support prepared as in Example 1 were suspended in 50 ml of n-hexane in a 0.2 liter glass reactor. 4.1 ml of vanadiumoxytrichloride solution in $CCl_4$, containing 0.071 g of vanadium per ml, molar ratio $CCl_4/VOCl_3$ = 30 were added to the suspension at ambient temperature. The mixture was stirred for 30 minutes at 60°C. The supernatant liquid phase was then decanted and the solid catalyst was washed three times with 100 ml of n-hexane. The catalyst product obtained contained 1.3 wt. percent of vanadium and 22.4 wt. percent of magnesium.

**COMPARATIVE EXAMPLE C1:** PREPARATION OF ETHYLENE/PROPYLENE COPOLYMER USING CATALYST OF COMPARATIVE EXAMPLE C

In essentially the same manner as described in Example 8, 0.025 gram of the catalyst prepared above was used for the copolymerization of ethylene and propylene. 18.8 g of the copolymer were obtained. The polymer yield was 58 kg per g of vanadium. Propylene content in the copolymer was 35.3 mole percent, or 42.3 wt. percent.

The data from the catalyst preparation detailed in the above examples is presented below in Table 1. A similar table with polymerization data is presented in Table 2.

The examples thus presented illustrate that the Comparative examples possess lower activity than those of the instant invention. For Comparative examples A and Al, non-activated $MgCl_2$ support was used for catalyst synthesis, and no subsequent treatment of the catalyst with an aluminum-organic compound is provided. In these examples, the precipitation of vanadium compound on $MgCl_2$ support was performed without a chlorinated hydrocarbon.

In Comparative Examples B and B1, the activity of the catalyst obtained was low as well, despite the addition of an alumino-organic compound ($AlEt_2Cl$), serving as reducer of vanadium. In Comparative Examples C and Cl, it is shown that the precipitation of vanadium compound on $MgCl_2$ support in the presence of $CCl_4$ allows an increase in the activity of the vanadium catalyst. However, it is not as active as the catalyst prepared according to the Examples 1-6 of the current invention where $MgCl_2$ support is activated by an alcohol and alumino-organic compound.

TABLE 1

| CATALYST PREPARATION | | | | | | | |
|---|---|---|---|---|---|---|---|
| EXAMPLE NO. | VANADIUM COMPOUND | V/Mg. MOLAR RATIO | $R^1C1_l$ | MOLAR RATIO $R^1Cl_nV$ | ALCOHOL | $R^2OH$/Mg MOLAR RATIO | $AlEt_2Cl/R^2OH$ MOLAR RATIO |
| 1 | $VCl_4$ | 0.07 | $CCl_4$ | 30 | 2-ETHYL HEXANOL | 0.7 | 0.6 |
| 2 | $VDCl_3$ | 0.08 | $CCl_4$ | 30 | 2-ETHYL HEXANOL | 2.0 | 0.5 |
| 3 | $VCl_4$ | 0.13 | $CCl_4$ | 10 | 2-ETHYL HEXANOL | 2.0 | 0.5 |
| 4 | $VCl_4$ | 0.11 | $CCl_4$ | 30 | n-BUTANOL | 2.0 | 0.5 |
| 5 | $VCl_4$ | 0.07 | $CHCl_3$ | 30 | 2-ETHYL HEXANOL | 0.7 | 0.5 |
| 6 | $VOCl_3$ | 0.24 | $CCl_4$ | 30 | 2-ETHYL HEXANOL | 2.0 | 0.2 |

TABLE 1 (continued)

| CATALYST PREPARATION | | | | | | | |
|---|---|---|---|---|---|---|---|
| EXAMPLE NO. | VANADIUM COMPOUND | V/Mg. MOLAR RATIO | $R^1C1_l$ | MOLAR RATIO $R^1Cl_nV$ | ALCOHOL | $R^2OH/Mg$ MOLAR RATIO | $AlEt_2Cl/R^2OH$ MOLAR RATIO |
| COMPARATIVE EXAMPLE NO. | | | | | | | |
| A | $VOCl_3$ | 0.029' | - | - | - | - | - |
| B | $VOCl_3$ | 0.04' | - | - | - | - | 0.362[2] |
| C | $VOCl_3$ | 0.027' | $CCl_4$ | 30 | - | - | - |

NOTES FOR TABLE 1:

1. THE V/Mg MOLAR RATIOS FOR COMPARATIVE EXAMPLES A, B, AND C ARE MEASURED AFTER WASHING THE CATALYST.
2. THE $AlEt_2Cl/MgCl_2$ MOLAR RATIO IS PRESENTED; THE CORRESPONDING MOLAR RATIO OF EXAMPLE 1 IS 0.46.

TABLE 2

| POLYMERIZATION DATA | | | | |
|---|---|---|---|---|
| Reaction Conditions:<br>Temperature: 70°C<br>Monomers pressure: 2.6 atm (263 kPa)<br>Content of polypropylene in monomer feed: 35 mole %. | | | | |
| EXAMPLE NO. | POLYMER YIELD kg/ g of V | $C_3H_6$ IN COPOLYMER, MOL% | $M_w$ X $10^5$ | $M_w/M_n$ |
| 7[1] | 287 | - | - | - |
| 8 | 192 | 34 | 6.2 | 3.9 |
| 9 | 96 | 37 | - | - |
| 10 | 111 | 36 | - | - |
| 11 | 91 | 35.5 | - | - |
| 12 | 128 | 34.2 | - | - |
| 13 | 82 | 33.8 | - | - |
| 14[2] | 110 | 62 | 5.8 | 3.8 |
| 15[3] | 69.4 | 29 | - | - |
| 16[4] | 209 | 29 | 9.1 | 2.5 |
| 17[5] | 125 | 35.8 | 0.24 | 2.7 |
| 18[6] | 69 | 30 | - | - |
| COMPARATIVE EXAMPLE NO. | | | | |
| A1 | 28 | 33.5 | - | - |
| B1 | 25 | 34.2 | - | - |
| C1 | 58 | 35.3 | - | - |

NOTES FOR TABLE 2:

1. EXAMPLE 1 IS ETHYLENE HOMOPOLYMERIZATION AT ETHYLENE PRESSURE OF 7.0 atm (733 kPa),80°C, 0.7 VOLUME % OF HYDROGEN, POLYETHYLENE MELT INDEX (LOAD 5 kg) 0.15g/10 minutes.
2 MONOMERS PRESSURE 3.6 atm (377 kPa). PROPYLENE CONTENT IN MONOMERS FEED IS 70 mol %.
3. TERPOLYMERIZATION OF ETHYLENE, PROPYLENE, AND OCTENE-1 AT PRESSURE 3.6 atm (377 kPa). PROPYLENE CONTENT IN FEED 30 mol %, CONCENTRATION OF OCTENE -1 = 100 ml / l, CONTENT OF OCTENE-1 IN COPOLYMER WAS 11 mol %.
4. COPOLYMERIZATION TEMPERATURE 60°C. CONTENT OF PROPYLENE IN FEED 30 mol %.
5. COPOLYMERIZATION CARRIED OUT IN THE PRESENCE OF 13.3 VOLUME PERCENT HYDROGEN.
6. TERPOLYMERIZATION OF ETHYLENE WITH PROPYLENE AND ETHYLENE AND ETHILYIDENENE NORBORBORNENE (ENB). CONCENTRATION OF ENB WAS 7.5 ml / l, CONTENT OF ENB IN COPOLYMER WAS 3 mol %.

## Claims

1. A process for preparing a supported alpha-olefin copolymerization catalyst of a vanadium compound comprising the steps of:

   a) preparing an activated magnesium-containing support by contacting magnesium chloride with an alcohol;
   b) depositing said vanadium compound on said magnesium-containing support in the presence of an chlorinated hydrocarbon, $R^1Cl_n$ (wherein n = 1 - 4), to form a supported vanadium compound; and
   c) combining said supported vanadium compound with an organoaluminum compound.

2. A process according to claim 1 wherein said vanadium compound is selected from the group consisting of vanadium halides, oxyhalides, alkoxides, and acetylacetonates.

3. A process according to claim 1 wherein said preparing step is carried out within a liquid hydrocarbon and said alcohol is of the structure $R^2OH$ wherein $R^2$ is straight chain or branched alkyl, aryl, cycloalkyl, arylalkyl, alkadienyl, or alkenyl containing from 2 to 20 carbon atoms.

4. A process according to claim 3 wherein said preparing step is carried out using said alcohol at a $R^2OH/Mg$ mole ratio of about 0.5 to about 2.0 and wherein $R^2$ is $C_2H_5$ to $C_8H_{17}$.

5. A process according to claim 1 wherein said vanadium compound is selected from the group consisting of vanadium trichloride, vanadium tetrachloride, vanadium tetrabromide, vanadium oxytrichloride, alkyl vanadates, vanadyl acetylacetonates, vanadium acetylacetonates, and vanadium halovanadates.

6. A process according to claim 3 wherein said organoaluminum compound is of the formula $AlR''_nX_{3-n}$, wherein R" is $C_2H_5$ to $C_4H_9$, n is 1,2 or 3, X is halogen and said organoaluminum compound is present at about 0.2 to about 1.0 mole ratio of $AlR''_nX_{3-n}$ to $R^2OH$.

7. A process according to claim 6 wherein said organoaluminum compound is of the composition $AlR''_nX_{3-n}$, wherein n is 2 and R" is $C_2H_5$ to $C_4H_9$.

8. A process according to claim 6 wherein said organoaluminum compound is present at about 0.2 to about 1.0 mole ratio of $AlR''_nX_{3-n}$ to $R^2OH$.

9. A process according to claim 1 wherein in said depositing step said vanadium compound is deposited on said magnesium-containing support in the presence of from about 10 to 60 moles of an alkylhalide per mole of said vanadium compound to form a supported vanadium compound and wherein said chlorinated hydrocarbon is of the formula $CH_nCl_{4-n}$ and n is 0, 1, 2.

10. A process according to claim 1 wherein said vanadium compound is $VCl_4$ or $VOCl_3$.

11. A process according to claim 1 wherein in said preparing step and said depositing step take place in one or more inert solvents.

12. A process for the polymerization of ethylene and alpha-olefins having up to 20 carbon atoms or mixtures of ethylene, alphaolefins or diolefins which process comprises polymerizing one or more olefins in the presence of a catalyst system comprising (1) an organoaluminum cocatalyst and (2) a vanadium containing copolymerization catalyst obtained with a process according to claim 1.

13. A process for the polymerization of ethylene and alpha-olefins according to claim 12 further comprising conducting the step of polymerizing in the presence of hydrogen gas.

14. A process for the polymerization of ethylene and alpha-olefins according to claim 12 wherein said polymerization is carried out at 50 to 90° C.

15. A process for the polymerization of ethylene and alpha-olefins according to claim 12 wherein said cocatalyst is of the formula $AlR''_3$ wherein R" is a linear or branched alkyl of from $C_1$ to $C_{18}$.

16. A process for the polymerization of ethylene and alpha-olefins according to claim 12 wherein said cocatalyst is aluminum triisobutyrate or triethylaluminum.

17. A process for the polymerization of ethylene and alpha-olefins according to claim 12 wherein said process is a solution terpolymerization of ethylene, propylene and a conjugated diene wherein said polymerization takes place in an inert hydrocarbon solvent.

**Patentansprüche**

1. Verfahren zur Herstellung eines sich auf einem Träger befindlichen alpha-Olefincopolymerisationskatalysators einer Vanadiumverbindung umfassend die Schritte:

   a) Herstellen eines aktivierten magnesiumhaltigen Tägers, indem Magnesiumchlorid mit einem Alkohol in Kontakt gebracht wird,
   b) Abscheiden der Vanadiumverbindung auf dem magnesiumhaltigen Träger in Gegenwart eines Chlorkohlenwasserstoffs $R^1Cl_n$ (wobei n = 1 bis 4), wodurch eine sich auf einem Träger befindliche Vanadiumverbindung hergestellt wird, und
   c) Verbinden der sich auf einem Träger befindlichen Vanadiumverbindung mit einer Organoaluminiumverbindung.

2. Verfahren nach Anspruch 1, wobei die Vanadiumverbindung ausgewählt ist aus der Gruppe bestehend aus Vanadiumhalogeniden, -oxyhalogeniden, -alkoxyden und -acetylacetonaten.

3. Verfahren nach Anspruch 1, wobei der Herstellungsschritt in einem flüssigen Kohlenwasserstoff durchgeführt wird und der Alkohol die Struktur $R^2OH$ aufweist, in der $R^2$ für ein geradkettiges oder verzweigtkettiges Alkyl, Aryl, Cycloalkyl, Arylalkyl. Alkadienyl oder Alkenyl steht. die von 2 bis 20 Kohlenstoffatome aufweisen.

4. Verfahren nach Anspruch 3. wobei der Herstellungsschritt unter Verwendung des Alkohols in einem Molverhältnis von $R^2OH/Mg$ von etwa 0.5 bis etwa 2,0 durchgeführt wird und wobei $R^2$ für $C_2H_5$ bis $C_8H_{17}$ steht.

5. Verfahren nach Anspruch 1, wobei die Vanadiumverbindung ausgewählt ist aus der Gruppe bestehend aus Vanadiumtrichlorid. Vanadiumtetrachlorid, Vanadiumtetrabromid. Vanadiumoxytrichlorid. Alkylvanadaten, Vanadylacetylacetonaten, Vanadiumacetylacetonaten und Vanadiumhalogenvanadaten.

6. Verfahren nach Anspruch 3, wobei die Organoaluminiumverbindung die Formel $AlR''_nX_{3-n}$ aufweist, in der R" für $C_2H_5$ bis $C_4H_9$, n für 1, 2 oder 3, X für Halogen steht und die Organoaluminiumverbindung von $AlR''_nX_{3-n}$ zu $R^2OH$ von etwa 0.2 bis etwa 1,0 vorliegt.

7. Verfahren nach Anspruch 6, wobei die Organoaluminiumverbindung die Formel $AlR''_nX_{3-n}$ aufweist. wobei n für 2 und R" für $C_2H_5$ bis $C_4H_9$ stehen.

8. Verfahren nach Anspruch 6, wobei die Organoaluminiumverbindung in einem Molverhältnis von $AlR''_nX_{3-n}$ zu $R^2OH$ von etwa 0,2 bis etwa 1,0 vorliegt.

9. Verfahren nach Anspruch 1, wobei in dem Abscheidungsschritt die Vanadiumverbindung auf dem magnesiumhaltigen Träger in Gegenwart von etwa 10 bis 60 Mol eines Alkylhalogenids pro Mol der Vanadiumverbindung abgeschieden wird, wodurch eine sich auf einem Träger befindliche Vanadiumverbindung hergestellt wird und wobei der Chlorkohlenwasserstoff die Formel $CH_nCl_{4-n}$ aufweist und n für 0, 1 oder 2 steht.

10. Verfahren nach Anspruch 1, wobei die Vanadiumverbindung $VCl_4$ oder $VOCl_3$ ist.

11. Verfahren nach Anspruch 1, wobei in dem Herstellungsschritt die Abscheidung in einem oder mehreren inerten Lösungsmittel(n) erfolgt.

12. Verfahren zur Polymerisation von Ethylen und alpha-Olefinen mit bis zu 20 Kohlenstoffatomen oder Gemischen von Ethylen alpha-Olefinen oder Diolefinen, wobei das Verfahren das Polymerisieren eines Olefins oder mehrerer Olefine in Gegenwart eines Katalysatorsystems umfaßt, das (1) einen Organoaluminiumcokatalysator und (2) einen vanadiumhaltigen Copolymerisationskatalysator, der nach einem Verfahren nach Anspruch 1 erhalten wurde, aufweist.

**13.** Verfahren zur Polymerisation von Ethylen und alpha-Olefinen nach Anspruch 12, das weiterhin das Durchführen des Schrittes des Polymerisierens in Gegenwart von Wasserstoffgas umfaßt.

**14.** Verfahren zur Polymerisation von Ethylen und alpha-Olefinen nach Anspruch 12, wobei die Polymerisation bei 50 bis 90°C durchgeführt wird.

**15.** Verfahren zur Polymerisation von Ethylen und alpha-Olefinen nach Anspruch 12. wobei der Cokatalysator die Formel $AlR"_3$ aufweist, wobei R" für ein lineares oder verzweigtes $C_1$-$C_{18}$-Alkyl steht.

**16.** Verfahren zur Polymerisation von Ethylen und alpha-Olefinen nach Anspruch 12. wobei der Cokatalysator Aluminiumtriisobutyrat oder Triethylaluminium ist.

**17.** Verfahren zur Polymerisation von Ethylen und alpha-Olefinen nach Anspruch 12, wobei das Verfahren eine Lösungsterpolymerisation von Ethylen. Propylen und einem konjugierten Dien ist, wobei die Polymerisation in einem inerten Kohlenwasserstofflösungsmittel stattfindet.

## Revendications

**1.** Procédé pour la préparation d'un catalyseur supporté d'un composé de vanadium pour la copolymérisation d'une alpha-oléfine, comprenant les étapes de :

a) préparer un support contenant du magnésium activé par mise en contact de chlorure de magnésium avec un alcool ;
b) déposer ledit composé de vanadium sur ledit support contenant du magnésium en présence d'un hydrocarbure chloré $R^1Cl_n$ (où n = 1-4) pour former un composé de vanadium supporté ; et
c) combiner ledit composé de vanadium supporté avec un composé d'organoaluminium.

**2.** Procédé selon la revendication 1 où ledit composé de vanadium est sélectionné dans le groupe consistant en halogénures, oxyhalogénures, alcoolates et acétylacétonates de vanadium.

**3.** Procédé selon la revendication 1 où ladite étape de préparation est effectuée dans un hydrocarbure liquide et ledit alcool est de la structure $R^2OH$ où $R^2$ est un alkyle à chaîne droite ou ramifiée, aryle, cyloalkyle, arylalkyle, alcadiényle, ou alcényle contenant 2 à 20 atomes de carbone.

**4.** Procédé selon la revendication 3 où ladite étape de préparation est effectuée en utilisant ledit alcool à un rapport molaire de $R^2OH/Mg$ d'environ 0,5 à environ 2,0 et où $R^2$ est $C_2H_5$ à $C_8H_{17}$.

**5.** Procédé selon la revendication 1 où ledit composé de vanadium est sélectionné dans le groupe consistant en trichlorure de vanadium, tétrachlorure de venadium, tétrabromure de vanadium, oxytrichlorure de vanadium, vanadates d'alkyle, acétylacétonates de vanadyle, acétylacétonates de vanadium et halovanadates de vanadium.

**6.** Procédé selon la revendication 3 où ledit composé d'organoaluminum est de la formule $AlR"_nX_{3-n}$, où R" est $C_2H_5$ à $C_4H_9$, n est 1, 2 ou 3, X est halogène et ledit composé d'organoaluminium est présent à raison d'environ 0,2 à environ 1,0 mole en rapport molaire de $AlR"_nX_{3-n}$ à $R^2OH$.

**7.** Procédé selon la revendication 6 où ledit composé d'organoaluminium est de la composition $AlR"_nX_{3-n}$, où n est 2 et R" est $C_2H_5$ à $C_4H_9$.

**8.** Procédé selon la revendication 6 où ledit composé d'organoaluminium est présent à un rapport molaire d'environ 0,2 à environ 1,0 mole de $AlR"_nX_{3-n}$ à $R^2OH$.

**9.** Procédé selon la revendication 1 où, dans ladite étape de dépôt, ledit composé de vanadium est déposé sur ledit support contenant du magnésium en présence d'environ 10 à 60 moles d'un alkylhalogénure par mole dudit composé de vanadium pour former un composé de vanadium supporté et où ledit hydrocarbure chloré est de la formule

$CH_nCl_{4-n}$ et n est 0, 1, 2.

**10.** Procédé selon la revendication 1 où ledit composé de vanadium est $VCl_4$ ou $VOCl_3$.

**11.** Procédé selon la revendication 1 où ladite étape de préparation et ladite étape de dépôt ont lieu dans un ou plusieurs solvants inertes.

**12.** Procédé pour la polymérisation d'éthylène et d'alpha-oléfines ayant jusqu'à 20 atomes de carbone ou de mélanges d'éthylène, d'alpha-oléfines ou de dioléfines, lequel procédé consiste à polymériser une ou plusieurs oléfines en présence d'un système catalyseur comprenant (1) un cocatalyseur d'organoaluminium et (2) un catalyseur de copolymérisation contenant du vanadium obtenu avec un procédé selon la revendication 1.

**13.** Procédé pour la polymérisation d'éthylène et d'alpha-oléfines selon la revendication 12, consistant de plus à entreprendre l'étape de polymérisation en présence d'hydrogène gazeux.

**14.** Procédé pour la polymériation d'éthylène et d'alpha-oléfines selon la revendication 12, où ladite polymériation est effectuée entre 50 et 90°C.

**15.** Procédé pour la polymérisation d'éthylène et d'alpha-oléfines selon la revendication 12 où ledit cocatalyseur est de la formule $AlR''_3$, où R" est un alkyle linéaire ou ramifié de $C_1$ à $C_{18}$.

**16.** Procédé pour la polymérisation d'éthylène et d'alpha-oléfines selon la revendication 12, où ledit cocatalyseur est le triisobutyrate d'aluminium ou le triéthylaluminium.

**17.** Procédé pour la préparation d'éthylène et d'alpha-oléfines selon la revendication 12, où ledit procédé est une terpolymérisation en solution de l'éthylène, du propylène et d'un diène conjugué, où ladite polymérisation a lieu dans un hydrocarbure solvant inerte.